# EUROPÄISCHE PATENTSCHRIFT

(11) **EP 1 346 861 B1**
(45) Veröffentlichungstag und Bekanntmachung des Hinweises auf die Patenterteilung: **11.08.2004**
(21) Anmeldenummer: 02013278.3
(22) Anmeldetag: 01.07.2002
(51) Int. Cl.: B60J 5/04

(54) **Seitenaufprallträger**
Side impact beam for vehicle
Poutre de choc pour véhicule

(30) Priorität: 22.03.2002 DE 10212792
(43) Veröffentlichungstag der Anmeldung: 24.09.2003
(73) Patentinhaber: Benteler Automobiltechnik GmbH, 33104 Paderborn (DE)
(72) Erfinder: Bullmann, Detlef, 33106 Paderborn (DE); Ulrich, Lars, 30982 Pattensen (DE); König, Ralf, 33189 Schlangen (DE); Fortstroer, Alfons, 33104 Paderborn (DE); Gehringhoff, Ludger, 33106 Paderborn (DE)
(74) Vertreter: Ksoll, Peter, Dr.-Ing.

(56) Entgegenhaltungen:
- DE-A- 4 328 441
- US-A- 5 580 120
- PATENT ABSTRACTS OF JAPAN vol. 017, no. 008 (M-1350), 7. Januar 1993 (1993-01-07) -& JP 04 238727 A (TOYOTA MOTOR CORP), 26. August 1992 (1992-08-26)

## Beschreibung

Die Erfindung betrifft einen Seitenaufprallträger zur Eingliederung in ein Kraftfahrzeug, welcher aus einem profilierten Metallblech mit mindestens einer Längssicke und verbreiterten Endabschnitten besteht.

Zum Stand der Technik zählt durch die DE 296 22 985 U1 ein Seitenaufprallträger mit einem ebenen Endabschnitt, an dem eine hochgebogene Anschlussfahne vorgesehen ist. Diese bildet einen Haken und ragt bei geschlossener Tür in eine der Türsäulen der Fahrzeugkarosserie hinein. Der Haken soll neben der Türschlossverbindung der Fahrzeugtür eine zweite formschlüssige Verbindung herstellen und bei einem Seitenaufprall für eine zusätzliche Sicherung sorgen.

Ferner zählt durch die WO 00/15453 ein Seitenaufprallträger zum Stand der Technik mit einem profilierten Längsträger und seitlichen ebenen und verbreiterten Endabschnitten.

Die US 5 580 120 A offenbart einen gattungsgemäßen Seitenaufprallträger zur Eingliederung in ein Kraftfahrteug, welcher aus einem profilierten Metallblech mit mindestens einer Längssicke und verbreiterten Endabschnitten besteht. Das Längsprofil des Seitenaufprallträgers ist als geschlossenes Profil ausgebildet. In den Endabschnitten sind quer zur Längssicke ausgerichtete wellenförmige Quersicken ausgebildet.

Zur Gewährleistung eines sachgerechten und rationellen Einbaus der Seitenaufprallträger in die Fahrzeugstruktur müssen die Endabschnitte, über die die Anbindung im Kraftfahrzeug erfolgt, gleichbleibend eben sein. Mithin unterliegen die Profilenden höchsten Planitätsanforderungen, um sie im Rahmen der Serienfertigung in die Fahrzeugstruktur verbauen zu können.

Hier treten jedoch im Rahmen der Fertigung Probleme auf, insbesondere wenn die Seitenaufprallträger aus höchstfesten Metallblechen kaltgeformt sind. Infolge der hohen Festigkeiten und durch das Umformen des Metallblechwerkstoffs kommt es zu inneren Spannungen, die dazu führen, dass an den Enden gravierende Abweichungen in der Ebenheit entstehen. Die Längsträger selbst oder die Enden können sich verdrehen, sind in sich gewölbt oder wellig. Diese unerwünschten Verformungen führen zu großen Verbauproblemen.

Der Erfindung liegt daher ausgehend vom Stand der Technik die Aufgabe zugrunde, einen funktionell verbesserten Seitenaufprallträger zu schaffen mit einbaugerecht ebenen Endabschnitten, bei dem für eine Großserienfertigung ein hohes Maß an Reproduzierbarkeit sichergestellt ist.

Die Lösung dieser Aufgabe besteht nach der Erfindung in einem Seitenaufprallträger gemäß den Merkmalen von Patentanspruch 1.

Zur Stabilisierung der Endabschnitte des Profils ist mindestens eine quer zur Längssicke des Seitenaufprallträgers ausgerichtete Quersicke vorgesehen. Durch diese zusätzliche Quersicke in den Endabschnitten wird sichergestellt, dass die Anbindungsflächen in den Endabschnitten eben sind. Für die Praxis bietet sich an, die Quersicken bei der Fertigung nach dem Formen der Längssicken in einer weiteren Werkzeugstufe einzubringen.

Jede Längssicke und die Quersicken sind in dieselbe Richtung ausgeprägt, wobei die Länge einer Quersicke der Breite einer Längssicke entspricht.

Die Geometrie der Quersicken hinsichtlich deren Abmessungen und Form wird auf die jeweiligen Seitenaufprallträger und deren Verbau- bzw. Einbausituation abgestimmt.

Bei dem erfindungsgemäßen Seitenaufprallträger handelt es sich somit um maßlich optimierte Profilbauteile. Verbauprobleme infolge von Maßungenauigkeiten der Anbindungsflächen sind erheblich reduziert oder sogar vollkommen ausgeschlossen. Die Versteifung der Profilenden unterstützt zudem die Funktion der Seitenaufprallträger und verbessert das Crashverhalten. Die Fertigungsmethode ist einfach und die Kosten hierfür gering.

Vorteilhafte Ausgestaltungen des grundsätzlichen Erfindungsgedankens charakterisieren die Merkmale der abhängigen Ansprüche 2 und 3.

Für die Praxis wird ein Seitenaufprallträger als besonders effizient angesehen, bei dem zwei Längssicken nebeneinander angeordnet sind. In beiden Endabschnitten ist jeweils eine Quersicke angeordnet, deren Länge etwa der Breite der beiden Längssicken entspricht.

Die Längssicken und die Quersicken sind in dieselbe Richtung ausgeprägt, wobei die Quersicken unmittelbar vor den in die Endabschnitte auslaufenden Längssicken liegen.

Bevorzugt wird der erfindungsgemäße Seitenaufprallträger aus einem Metallblech aus höchstfestem Stahl mit einer Zugfestigkeit von 1000 N/mm² oder höher gefertigt, und zwar durch Kaltumformung.

In praktischen Versuchen haben sich geometrische Abmessungen der Quer sicke als vorteilhaft ergeben, bei der die Tiefe ca. bei 4 mm liegt und die Breite ca. 6 mm beträgt. Die Länge einer Quersicke erstreckt sich über ca. 2/3 der Breite eines Endabschnitts.

Zweckmäßigerweise sind die Quersicken rechtwinklig zu der bzw. den Längssicken ausgerichtet. Grundsätzlich ist es aber auch möglich, die Quersicken, bezogen auf die Längsachse des Seitenaufprallträgers bzw. der Längssicke, schräg, also in einem Winkel verlaufend anzuordnen.

Die Erfindung ist nachfolgend anhand eines in den Zeichnungen dargestellten Ausführungsbeispiels näher beschrieben. Es zeigen:
- Figur 1: in perspektivischer Darstellungsweise ein Ende eines Seitenaufprallträgers;
- Figur 2: einen vertikalen Querschnitt durch die Darstellung gemäß der Figur 1 entlang der Linie A-A;
- Figur 3: den Endabschnitt des Seitenaufprallträgers in der Draufsicht und
- Figur 4: einen Schnitt durch die Darstellung der Figur 3 entlang der Linie B-B.

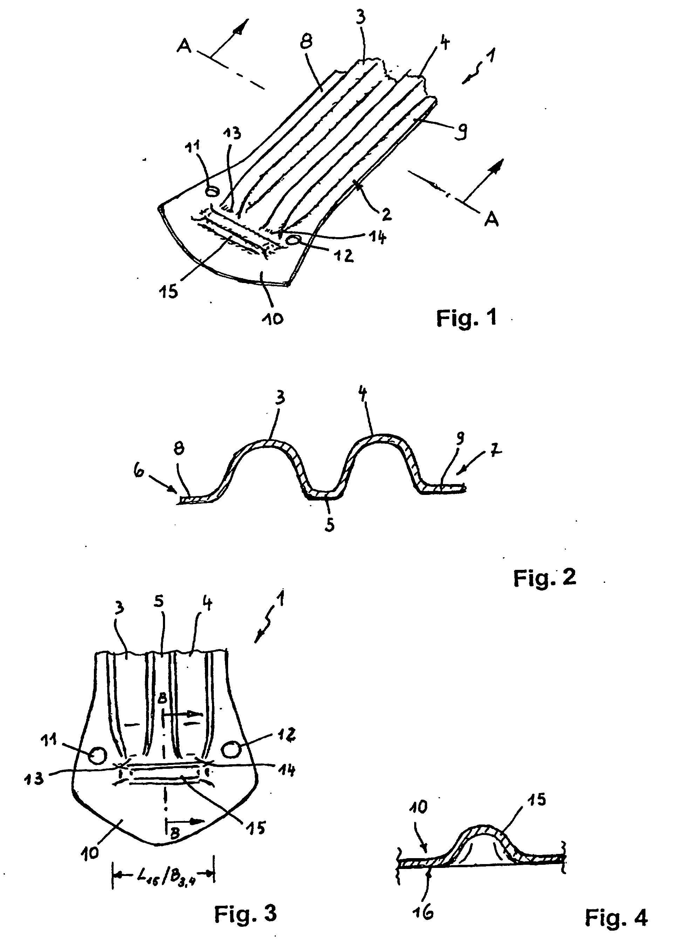

Die Figuren 1 und 3 zeigen einen endseitigen Bereich eines Seitenaufprallträgers 1 zur Eingliederung in eine hier nicht dargestellte Fahrzeugtür eines Kraftfahrzeugs. Der Seitenaufprallträger 1 besteht aus einem kalt umgeformten profilierten Metallblech 2 mit einer Dicke zwischen 1,0 mm und 3,0 mm. Er soll die Fahrzeugtür bei einem Seitenaufprall aussteifen und unter homogener Verformung Energie absorbieren.

Auf dem überwiegenden Teil seiner Länge weist der Seitenaufprallträger 1 zwei sich nebeneinander erstreckende Längssicken 3, 4 auf. Wie insbesondere anhand der Figur 2 zu erkennen ist, sind die Längssicken 3, 4 halbrohrartig oder hutförmig gekrümmt und über einen gemeinsamen Mittelsteg 5 verbunden. An beide äußeren Längsseiten 6, 7 des Metallprofils 2 sind quer abstehende Längsstege 8, 9 vorgesehen.

Das Metallprofil 2 weist endseitig jeweils einen verbreiterten Endabschnitt 10 auf. Mit den Endabschnitten 10 wird der Seitenaufprallträger 1 in der Fahrzeugstruktur festgelegt. Man erkennt in der Figur 1 ebenso wie in der Darstellung gemäß Figur 3 zwei Öffnungen 11, 12 zur Durchführung von Befestigungsmitteln. Üblicherweise werden die Seitenaufprallträger 1 über die Endabschnitte 10 im Türrahmen der Karosserie verschweißt.

Die Höhe der Längssicken 3, 4 nimmt zu den Endabschnitten 10 hin ab und läuft in deren Ebene aus. Vor den Enden 13, 14 der Längssicken 3, 4 ist eine Quersicke 15 eingebracht. Figur 4 zeigt die Quersicke 15 im Querschnitt.

Die Quersicke 15 und die Längssicken 3, 4 sind in dieselbe Richtung ausgeprägt, wobei die Länge L₁₅ der Quersicke 15 etwa der Breite B_{3,4} der beiden Längssicken 3, 4 entspricht.

Die Quersicke 15 wird bei der Fertigung des Seitenaufprallträgers 1 nach dem Formen der Längssicken 2, 3 in einem nachgeschalteten Umformvorgang in einer weiteren Werkzeugstufe eingebracht. Mit dem Prägevorgang der Quersicke 15 werden die Anbindungsflächen 16 der Endabschnitte 10 geebnet bzw. gerichtet und kalibriert. Etwaige Verformungen aus dem vorgeschalteten Umformvorgang werden begradigt. Zusätzlich werden die Endabschnitte 10 ausgesteift, wodurch das Crashverhalten des Seitenaufprallträgers 1 verbessert werden kann.

Aufgrund der auch im Zuge einer Massenfertigung gleichbleibend hohen Qualität und Reproduzierbarkeit der Endabschnitte 10 sowie des Seitenaufprallträgers 1 insgesamt kann dessen Einbau verbessert und rationalisiert werden.

### Bezugszeichenaufstellung

- 1 -: Seitenaufprallträger
- 2 -: Metallblech
- 3 -: Längssicke
- 4 -: Längssicke
- 5 -: Mittelsteg
- 6 -: Längssicke
- 7 -: Längssicke
- 8 -: Längssteg
- 9 -: Längssteg
- 10-: Endabschnitt
- 11 -: Öffnung
- 12 -: Öffnung
- 13 -: Ende v. 2
- 14 -: Ende v. 3
- 15 -: Quersicke
- 16 -: Anbindungsfläche

- B_{3,4} -: Breite v. 3, 4
- L₁₅ -: Länge v. 15

## Patentansprüche

1. Seitenaufprallträger zur Eingliederung in ein Kraftfahrzeug, welcher aus einem profilierten Metallblech mit mindestens einer Längssicke (3, 4) und verbreiterten Endabschnitten (10) besteht, wobei in den Endabschnitten (10) quer zur Längssicke ausgerichtete Quersicken (15) ausgebildet sind, **dadurch gekennzeichnet, dass** jede Längssicke (3, 4) und die Quersicken (15) in die selbe Richtung ausgeprägt sind, wobei die Länge einer Quersicke (15) der Breite einer Längssicke (3, 4) entspricht und die Endabschnitte (10) ebene Anbindungsflächen (16) aufweisen.

2. Seitenaufprallträger nach Patentanspruch 1, **dadurch gekennzeichnet, dass** zwei sich nebeneinander erstreckende Längssicken (3, 4) vorgesehen sind und die Länge (L₁₅) jeder Quersicke (15) der Breite (B_{3,4}) der beiden Längssicken (3, 4) entspricht.

3. Seitenaufprallträger nach Patentanspruch 1 oder 2, **dadurch gekennzeichnet, dass** die Quersicken (15) unmittelbar vor den Enden (13, 14) jeder Längsicke (3, 4) liegen.

## Claims

1. A side impact absorber for incorporation in a motor vehicle, consisting of a profiled metal plate with at least one longitudinal corrugation (3, 4) and widened end portions (10), transverse corrugations (15) extending transversely of the longitudinal corrugation being formed in the end portions (10), **characterised in that** each longitudinal corrugation (3, 4) and the transverse corrugations (15) are stamped out in the same direction, the length of a transverse corrugation (15) being equal to the width of a longitudinal corrugation (3, 4) and the end portions (10) forming flat attachment surfaces (16).

2. A side impact absorber according to claim 1, **characterised in that** two longitudinal corrugations (3, 4) extending side by side are provided and the length (L₁₅) of each transverse corrugation (15) is equal to the width (B_{3,4}) of the two longitudinal corrugations (3, 4).

3. A side impact absorber according to claim 1 or 2, **characterised in that** the transverse corrugations (15) are situated directly in front of the ends (13, 14) of each longitudinal corrugation (3, 4).

## Revendications

1. Poutre de choc latéral pour incorporation dans un véhicule, qui consiste en une tôle métallique profilée avec au moins une moulure longitudinale (3,4) et des tronçons d'extrémité élargis (10), dans laquelle dans les tronçons d'extrémité (10) sont formées des moulures transversales (15) orientées transversalement par rapport à la moulure longitudinale, **caractérisée en ce que** chaque moulure longitudinale (3,4) et les moulures transversales (15) sont imprimées dans la même direction, tandis que la longueur d'une moulure transversale (15) correspond à la largeur d'une moulure longitudinale (3,4) et les tronçons d'extrémité (10) présentent des faces de raccordement (16).

2. Poutre de choc latéral selon la revendication 1, **caractérisée en ce qu'**il est prévu deux moulures longitudinales (3,4) s'étendant côte à côte et la longueur (L₁₅) de chaque moulure (15) correspond à la largeur (B₃₄) des deux moulures longitudinales (3,4).

3. Poutre de choc latéral selon la revendication 1 ou 2, **caractérisée en ce que** les moulures transversales (15) se situent directement devant les extrémités (13,14) de chaque moulure longitudinale (3,4).
